# EUROPEAN PATENT SPECIFICATION

(11) **EP 4 171 780 B1**
(45) Date of publication and mention of the grant of the patent: **30.07.2025**
(21) Application number: 20942619.6
(22) Date of filing: 30.06.2020
(51) Int. Cl.: B01D 25/19, B01D 25/172, B01D 25/21, G01B 7/04, G01B 11/04, G01B 21/06, G01B 13/04

(54) **PRESSURE FILTER**
DRUCKFILTER
FILTRE SOUS PRESSION

(43) Date of publication of application: 03.05.2023
(73) Proprietor: Metso Finland Oy, 02230 Espoo (FI)
(72) Inventor: LI, Zhihong, Shanghai 201201 (CN); FOSTER, Geoffrey, Suzhou, Jiangsu 215021 (CN); GE, Linlin, Nantong, Jiangsu 226004 (CN); YAN, Huan, Shanghai 201209 (CN)
(74) Representative: Boco IP Oy Ab
(86) International application number: PCT/CN2020/099329
(87) International publication number: WO 2022/000278

(56) References cited:
- CN-A- 1 317 357
- CN-A- 101 091 846
- CN-A- 101 091 846
- CN-A- 102 179 084
- CN-A- 103 894 007
- CN-U- 201 565 173
- CN-U- 203 935 661
- CN-U- 208 356 208
- CN-U- 208 356 208
- CN-U- 209 848 412
- US-A- 3 608 734

## Description

### Technical Field

The present disclosure relates to pressure filters, and more particularly to horizontal plate pressure filters, in which filter chambers are formed between horizontally extending superimposed filter plates. Such filters are also known as tower presses.

### Background

Horizontal plate pressure filters have a plurality of horizontally extending superimposed filter plates, between which filter chambers are formed. During operation the filter plates are pressed against each other to seal filter chambers between the filter plates. Slurry is then fed into the filter chambers and filtrate is separated therefrom while the solid contents of the slurry form filter cakes within the filter chambers. Subsequently, the filter plates are moved away from each other to open the filter chambers so that the filter cake may be discharged therefrom, and further moved towards each other to close the filter chamber again. This sequence is then repeated.

CN101091846A discloses a vertical fully automated plate-and-frame filter press including for instance a levelling board frame group, a main body support structure, a board frame group opening and holding apparatus, a filtering cloth automatic cycle running gear, a filtering cloth washing device, automatic control system, hydraulic system, and a craft circuitry.

CN209848412U discloses an anti-retraction pressing device for a vertical filter press, which ensures consistent sealing pressure by using a displacement compensation oil cylinder, while securely locking the filter plate assembly with anti-retraction clamping plates that engage with cylindrical beam slots.

### Summary of the Invention

According to a first aspect of the invention, a pressure filter is disclosed according to claim 1.

According to a second aspect of the invention, a method of determining when plate seals in a pressure filter should be replaced is disclosed according to claim 13.

Additional advantageous features of the invention are set out in the dependent claims.

### Brief Description of the Drawings

Figure 1 shows horizontal filter press in accordance with the present invention.
Figure 2 show a method for operating the filter press in accordance with the present invention.

### Detailed Description

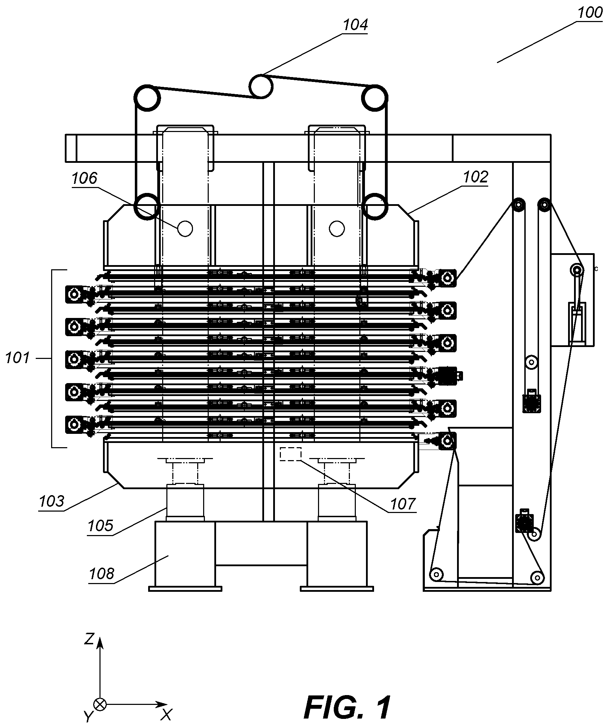

Figure 1 depicts a pressure filter 100. The pressure filter includes a plurality of filter plates 101 which are arranged in a vertical stack, i.e. arranged in a column extending along the Z axis as shown in Figure 1. Each filter plate 101 lies in a horizontal plane, that is the two major dimensions of the filter plate lie in the X-Y plane as shown in Figure 1, perpendicular to the Z axis. Each filter plate 101 is parallel to and offset from the other filter plates. The filter plates 101 and other components located between the filter plates are shaped such that when the filter plates 101 are pressed together, filter chambers are formed between each adjacent pair of filter plates 101.

Above the filter plates 101 is an upper pressing plate 102, sometimes referred to as a head plate, and below the filter plates 101 is a lower pressing plate 103, sometimes referred to as a tail plate, rear plate or end plate. By moving the upper pressing plate 102 and lower pressing plate 103, the filter plates 101 can be moved away and towards one another in order to open and close the filter chambers.

Upper actuator 104 is configured to move the upper pressing plate and lower actuator 105 is configured to move the lower pressing plate. The pressure and force required for sealing the filter chambers is much greater that that required for opening and closing the filter chambers, and thus the actuators 104 and 105 must be correspondingly dimensioned for each purpose. In the arrangement shown in Figure 1, upper actuator 104 is configured to produce the large displacement and low force required to open and close the filter chambers and lower actuator 105 is configured to produce the lower displacement and large force required to seal the filter chambers. The upper pressing plate 102 may be locked in place by locking pins 106 once the upper pressing plate 102 and filter plates 101 are in the closed position following actuation of the upper actuator 104.

As a result of the different displacement and force requirements of the upper and lower actuators 104, 105, different types of actuators may be used. In a preferred embodiment, the upper actuator 104 is an electrical actuator that may be coupled with mechanical means, such as gears and chains or pulleys, in order to product the required displacement. The lower actuator 105 is preferably a hydraulic actuator, which is capable of providing the required force for sealing the filter chambers. However, the specific type of actuator that is used for each of the upper and lower actuators 104, 105 is not central to the present invention and the present invention may indeed be used with any horizontal pressure filter regardless of the types of actuators used to move the upper and lower pressing plates.

Furthermore, even though Figure 1 shows a pressure filter in which the large-displacement, low force actuator drives movement of the upper pressing plate and the low-displacement, larger force actuator drive movement of the lower pressing plate, the arrangement may be reversed, in which case locking pins 106 will also be present on the lower pressing plate 103 instead of the upper pressing plate 102. Thus, while this disclosure refers to "upper" and "lower" pressing plates, as depicted in Figure 1, it will be appreciated that the arrangement may be reversed and the actual position of the pressing plates as "upper" or "lower" is not essential to the invention.

The lower pressing plate 103 - i.e. the pressing plate that is driven by the lower displacement, higher force actuator - is moveable between a retracted position and a sealed position. The retracted position the lower pressing plate 103 is a set position at which the lower pressing plate 103 is located before the actuator 105 drives movement of the pressing plate 103 in order to seal the filter chambers between filter plates 101 and to which the lower pressing plate 103 returns after a filter cycle is complete, i.e. after the actuator 105 retracts the pressing plate 103. Thus, in the context of this disclosure, the term "retracted position" does not mean simply any position that is somewhat retracted from the sealed position, but it is in fact a set position of the pressing plate which is consistent across cycles of the pressure filter.

The sealed position is the position of the lower pressing plate 103 after the actuator 105 drives movement of the lower pressing plate 103 towards the filter plates 101 in order to seal the filter chambers between pressing plates. The sealed position is therefore the position of the lower pressing plate 103 after the sealing force, which is a predetermined force, is applied to the lower pressing plate 103 by the actuator 105 and before the filter chambers are pressurised. For example, when the actuator 105 is a hydraulic actuator, 40-50 bar of hydraulic pressure may be applied to the lower pressing plate 103. The predetermined force that is applied to the lower pressing plate 103 by the actuator 105 is consistent between filter cycles.

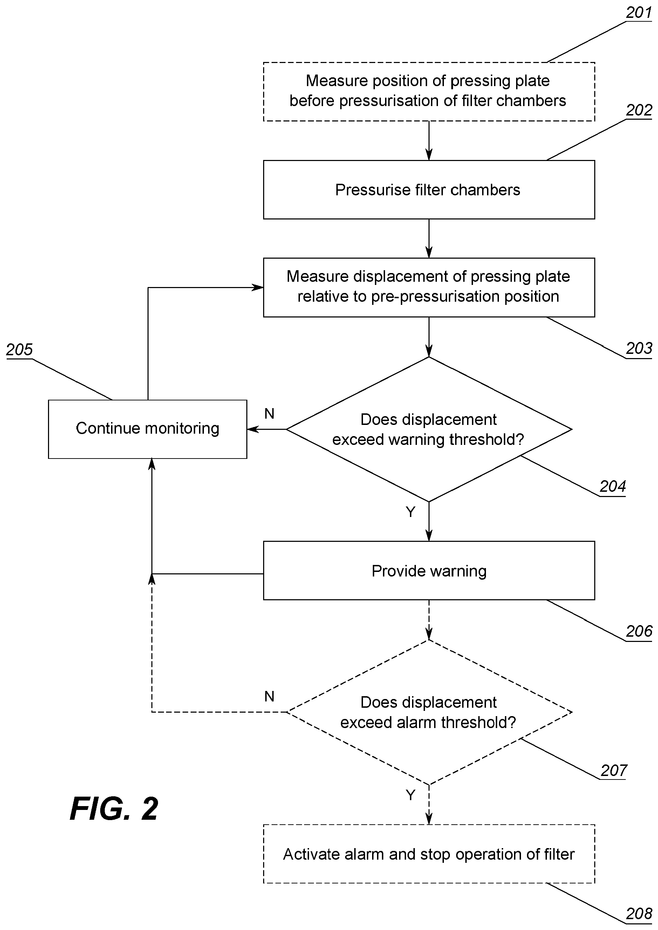

Plate seals (shown in Figure 2) are located between filter plates 101 and in the sealed position, i.e. when the predetermined sealing force is applied, form pressure seals between the filter plates 101 to form the filter chambers. The plate seals are typically made from natural rubber, EPDM, butyl or other rubber material, or a combination of these materials.

The pressure filter 100 also includes a displacement sensor 107, which measures the displacement of the lower pressing plate 103 relative to the stationary elements of the pressure filter 100, e.g. to the lower frame 108. It will be appreciated that in a pressure filter where the functions of the upper and lower pressing plates and actuators are reversed, the displacement sensor will instead measure the displacement of the upper pressing plate relative to the upper frame of the pressure filter.

The displacement sensor is preferably a string displacement sensor connected between the lower pressing plate 103 and the lower frame 108. A string displacement sensor, also known a string pot displacement sensor, typically includes a variable resistor with a spring-loaded string that can be pulled out to measure displacements. The resistance of the device changes depending on how much displacement is applied to the string. The spring-loading mechanism is attached to one of the lower pressing plate 103 and lower frame 108 while the opposite end of the string is fixed to the other of the lower pressing plate 103 and lower frame 108, such that movement of the lower pressing plate 103 relative to the lower frame 108 causes the spring to be pulled out from or retracted by the spring loading mechanism. It will be appreciated that while the invention is described as using a string displacement sensor, the specific type of sensor that is used is not essential to the invention and any displacement sensor capable of measuring displacement of the lower pressing plate 103 across the required range may be used.

During operating of the pressure filter 100, the displacement sensor is used to measure the position or displacement of the lower pressing plate 103 during and after pressurisation of the filter chambers. As part of the filter cycle, once the lower pressing plate 103 is in the sealed position, the filter chambers formed between the pressure plates are pressurised. A typical filter cycle - also referred to as "process" in the art - involves filling the filter chambers with material to be filtered, e.g. slurry, washing the material with a suitable liquid, e.g. water, pressing the washed material by expanding diaphragms within the filter chambers, washing the pressed material and pressing the material again, followed by a final step of air drying. Some of these steps may be omitted depending on the specific material being filtered. After these steps are complete, the pressing plates are disengaged and the filter cakes that are left behind in each filter chamber can be removed.

At each of these steps the filter chambers are pressurised to different extents. For example, during the filling step, the pressure within each filter chamber increases to around 4-8 bar. In the washing steps, the pressure increases by 1-2 bar to around 5-10 bar. Similar pressure is reached in the air blowing stage. In the pressing step, the pressure is highest, reaching up to 16 bar in each pressing chamber. It is essential that the force applied to the lower pressing plate 103 by the actuator 105 is maintained and that the position of the lower pressing plate 103 does not change significantly during pressurisation at each of the stages mentioned above, or after pressuring while the filter chambers are pressurised, i.e. when the pressure is static, in order to maintain the seals between the filter plates 101. A large enough change in the force applied to the lower pressing plate 103 will result in movement of the lower pressing plate 103 while the filter chambers are under pressure, and may be caused, for example, by a leak in the hydraulic actuator 105.

The displacement sensor 107 is therefore configured to monitor the position or displacement of the lower pressing plate 103 during pressurisation and after pressurisation while the filter chambers are still pressurised, i.e. when the filter chambers are under pressure.

The position of the lower pressing plate 103 in the sealed position may be measured before the filter chambers are pressurised. Since the displacement sensor 107 is connected to the lower frame 108, the position may be measured relative to the lower frame or to the retracted position. Alternatively, the sensor reading may be initialised, i.e. set to zero in the sealed position before pressurisation.

Subsequently, during and after pressurisation of the filter chambers, until the lower pressing plate is intentionally moved, the position or displacement of the lower pressing plate 103 is monitored. Monitoring may be performed at regular intervals or may be performed continuously. If the displacement exceeds a first threshold then a warning is produced. Optionally, if the displacement exceeds a second threshold, then the filter cycle may be interrupted in order to prevent damage to the pressure filter.

The first threshold, or warning threshold, may be anywhere in the range or 1-5 mm of displacement. The second threshold, or alarm threshold, may be anywhere in the range of 3-10 mm, although the alarm threshold is always higher than the warning threshold. The precise value depends on the number of filter plates and the types of plate seals that are used between the plates to form the filter chambers, at least.

Figure 2 shows a method of operating the filter press in accordance with the present invention.

At step 201, the position of the lower pressing plate 103 (or upper pressing plate, if the upper pressing plate is used to provide the sealing pressure for the filter chambers) is moved from the retracted position to the sealed position. The position of the lower pressing plate 103 or its displacement relative to the retracted position or lower frame 108 may be measured to provide a baseline.

At step 202, the filter chambers are pressured, e.g. by pumping material to be filtered into the filter chambers under pressure or in any other the other stages of the filter cycle described above.

At step 203, the displacement of the pressing plate relative the pre-pressurisation position is measured, e.g. relative to the baseline measured at step 201. At step 204, the displacement is compared to a threshold and, if the threshold is not exceeded, the monitoring process resumes at step 205 and 203. The process of monitoring, measuring and comparing the displacement to the threshold may be continuous or performed at regular intervals.

If the threshold is exceeded then, at step 206, a warning is provided, e.g. via a control system or control panel for the pressure filter. Following step 206, the process may continue to step 205 where the filtering process and monitoring continues.

Alternatively, the displacement may be compared to a second threshold, also referred to the alarm threshold, at step 207. If the alarm threshold is not exceeded, then the monitoring process continues at step 205 and returns to step 203. In this embodiment, the warning of step 206 may instead only be provided after step 207 when the displacement does not exceed the alarm threshold.

If the displacement exceeds the alarm threshold, then at step 208 an alarm is activated and the filter cycle is stopped immediately to prevent leakage and/or damage to the system.

## Claims

1. A pressure filter (100), comprising:
a plurality of filter plates (101), wherein the filter plates (101) are arranged in a stack;
a moveable pressing plate configured to be moved from a retracted position to an engaged position to form filter chambers between adjacent filter plates (101); and
at least one displacement sensor (107) configured to measure the displacement of the moveable pressing plate relative to a stationary frame of the pressure filter (100);
**characterized in that** the pressure filter (100) is configured to:
monitor the displacement of the moveable pressing plate during cycle pressurization of the filter chambers; and
provide a warning if the displacement of the moveable pressing plate changes by an amount exceeding a threshold during pressurization.

2. The pressure filter (100) of claim 1, wherein the pressure filter (100) is further configured to continue to monitor the displacement of the moveable pressing plate after pressurisation while the filter chambers remain pressurised and to provide a warning if the displacement of the moveable pressure plate changes by an amount exceeding a threshold after pressurisation.

3. The pressure filter (100) of claim 1, wherein pressurising the filter includes at least one of: filling the filter chambers with material under pressure, pumping washing fluid into the filter chambers, inflating one or more diaphragms within the filter chambers and drying the material in the filter chambers with forced air.

4. The pressure filter (100) of any preceding claim, wherein the pressure filter (100) is further configured to measure the position of the moveable pressing plate when the moveable pressing plate is in the sealed position prior to pressurisation of the filter chambers.

5. The pressure filter (100) of claim 4, wherein the displacement of the moveable pressing plate is measured relative to the position of the moveable pressing plate in the sealed position prior to pressurisation of the filter chambers.

6. The pressure filter (100) of any preceding claim, wherein the threshold is a value within the range of 1-5mm.

7. The pressure filter (100) of any preceding claim, wherein the pressure filter (100) is further configured to provide an alarm and stop operation of the pressure filter (100) if the displacement of the moveable pressing plate changes by an amount exceeding a second threshold during pressurisation and/or after pressurisation while the filter chambers remain pressurised.

8. The pressure filter (100) of claim 7, wherein the second threshold is a value within the range of 3-10mm.

9. The pressure filter (100) of claim 8, when dependent on claim 6, wherein the second threshold is higher than the first threshold.

10. The pressure filter (100) of any preceding claim, wherein the displacement sensor (107) is a string sensor.

11. The pressure filter (100) of any preceding claim, wherein the pressure filter (100) is a horizontal plate filter, and wherein the stack of filter plates (101) is arranged vertically.

12. The pressure filter (100) of claim 11, wherein the moveable pressing plate is a lower pressing plate (103) positioned below the stack of filter plates (101), and/or
wherein the moveable pressing plate is an upper pressing plate (102) positioned above the stack of filter plates (101).

13. A method for operating a pressure filter (100), the pressure filter (100) comprising a plurality of filter plates (101) arranged in a stack, a plurality of plate seals disposed between the filter plates (101) for creating a plate seal between the filter plates (101) when under pressure, and a moveable pressing plate, the method comprising:
moving the moveable pressing plate to a sealed position to form filter chambers between the filter plates (101); and
pressurising the filter chambers; **characterized in that** the method further comprises
measuring the displacement of the moveable pressing plate during pressurisation of the filter chambers;
if the displacement exceeds a threshold, providing a warning.

14. The method of claim 13, wherein the method further comprises monitoring the displacement of the moveable pressing plate after pressurisation and providing a notification if the displacement of the moveable pressure plate changes by an amount exceeding a threshold after pressurisation.

15. The method of claim 13 or 14, wherein pressurising the filter includes at least one of: filling the filter chambers with material under pressure, pumping washing fluid into the filter chambers, inflating one or more diaphragms within the filter chambers and drying the material in the filter chambers with forced air.

16. The method of any one of claims 13 to 15, wherein the method further comprises measuring the position of the moveable pressing plate when the moveable pressing plate is in the sealed position prior to pressurisation of the filter chambers.

17. The method of claim 16, wherein the displacement of the moveable pressing plate is measured relative to the position of the moveable pressing plate in the sealed position prior to pressurisation of the filter chambers.

18. The method of any one of claims 13 to 17, wherein the pressure filter (100) is a horizontal plate filter, and wherein the stack of filter plates (101) is arranged vertically.

19. The method of claim 18, wherein the moveable pressing plate is a lower pressing plate (103) positioned below the stack of filter plates (101), and/or
wherein the moveable pressing plate is an upper pressing plate (102) positioned above the stack of filter plates (101).

## Patentansprüche

1. Druckfilter (100), umfassend:
eine Mehrzahl von Filterplatten (101), wobei die Filterplatten (101) in einem Stapel angeordnet sind;
eine bewegliche Druckplatte, die dazu ausgelegt ist, aus einer ausgerückten Position in eine eingerückte Position bewegt zu werden, um Filterkammern zwischen angrenzenden Filterplatten (101) zu bilden; und
mindestens einen Wegsensor (107), der dazu ausgelegt ist, die Bewegung der beweglichen Druckplatte im Verhältnis zu einem stationären Rahmen des Druckfilters (100) zu messen;
**gekennzeichnet dadurch, dass** der Druckfilter (100) ausgelegt ist zum:
Überwachen der Bewegung der beweglichen Druckplatte während einer zyklischen Druckbeaufschlagung der Filterkammern; und
Bereitstellen einer Warnung, falls sich die Bewegung der beweglichen Druckplatte während der Druckbeaufschlagung um einen Betrag ändert, der einen Schwellenwert übersteigt.

2. Druckfilter (100) nach Anspruch 1, wobei der Druckfilter (100) ferner ausgelegt ist zum Fortsetzen der Überwachung der Bewegung der beweglichen Druckplatte nach Druckbeaufschlagung, während die Filterkammern druckbeaufschlagt bleiben, und zum Bereitstellen einer Warnung, falls sich die Bewegung der beweglichen Druckplatte nach Druckbeaufschlagung um einen Betrag ändert, der einen Schwellenwert übersteigt.

3. Druckfilter (100) nach Anspruch 1, wobei die Druckbeaufschlagung des Filters mindestens eines von Folgendem umfasst: Füllen der Filterkammern mit Material unter Druck, Pumpen von Waschfluid in die Filterkammern; Aufblasen einer oder mehrerer Membranen in den Filterkammern und Trocknen des Materials in den Filterkammern mit zwangsumgewälzter Luft.

4. Druckfilter (100) nach einem vorhergehenden Anspruch, wobei der Druckfilter (100) ferner ausgelegt ist zum Messen der Position der beweglichen Druckplatte, wenn sich die bewegliche Druckplatte in der abgedichteten Position vor Druckbeaufschlagung der Filterkammern befindet.

5. Druckfilter (100) nach Anspruch 4, wobei die Bewegung der beweglichen Druckplatte im Verhältnis zu der Position der beweglichen Druckplatte in der abgedichteten Position vor Druckbeaufschlagung der Filterkammern gemessen wird.

6. Druckfilter (100) nach einem vorhergehenden Anspruch, wobei der Schwellenwert ein Wert im Bereich von 1-5 mm ist.

7. Druckfilter (100) nach einem vorhergehenden Anspruch, wobei der Druckfilter (100) ferner ausgelegt ist zum Bereitstellen eines Alarms und Anhalten des Betriebs des Druckfilters (100), falls sich die Bewegung der beweglichen Druckplatte während der Druckbeaufschlagung und/oder nach Druckbeaufschlagung mit druckbeaufschlagt bleibenden Filterkammern um einen Betrag ändert, der einen zweiten Schwellenwert übersteigt.

8. Druckfilter (100) nach Anspruch 7, wobei der zweite Schwellenwert ein Wert im Bereich von 3-10 mm ist.

9. Druckfilter (100) nach Anspruch 8, wenn von Anspruch 6 abhängig, wobei der zweite Schwellenwert höher als der erste Schwellenwert ist.

10. Druckfilter (100) nach einem vorhergehenden Anspruch, wobei der Wegsensor (107) ein Seilzugsensor ist.

11. Druckfilter (100) nach einem vorhergehenden Anspruch, wobei der Druckfilter (100) ein horizontaler Plattenfilter ist, und wobei der Stapel von Filterplatten (101) vertikal angeordnet ist.

12. Druckfilter (100) nach Anspruch 11, wobei die bewegliche Druckplatte eine untere Druckplatte (103) ist, die unterhalb des Stapels von Filterplatten (101) positioniert ist, und/oder
wobei die bewegliche Druckplatte eine obere Druckplatte (102) ist, die oberhalb des Stapels von Filterplatten (101) positioniert ist.

13. Verfahren zum Betreiben eines Druckfilters (100), wobei der Druckfilter (100) eine Mehrzahl von in einem Stapel angeordneten Filterplatten (101), eine Mehrzahl von zwischen den Filterplatten (101) angeordneten Plattendichtungen zur Herstellung einer Plattenabdichtung zwischen den Filterplatten (101), wenn diese unter Druck sind, und eine bewegliche Druckplatte umfasst, wobei das Verfahren umfasst:
Bewegen der beweglichen Druckplatte zu einer abgedichteten Position, um Filterkammern zwischen den Filterplatten (101) zu bilden; und
Druckbeaufschlagen der Filterkammern; **gekennzeichnet dadurch, dass** das Verfahren ferner umfasst:
Messen der Bewegung der beweglichen Druckplatte während der Druckbeaufschlagung der Filterkammern;
falls die Bewegung einen Schwellenwert übersteigt, Bereitstellen einer Warnung.

14. Verfahren nach Anspruch 13, wobei das Verfahren ferner umfasst: Überwachen der Bewegung der beweglichen Druckplatte nach Druckbeaufschlagung und Bereitstellen einer Mitteilung, falls sich die Bewegung der beweglichen Druckplatte nach Druckbeaufschlagung um einen Betrag ändert, der einen Schwellenwert übersteigt.

15. Verfahren nach Anspruch 13 oder 14, wobei die Druckbeaufschlagung des Filters mindestens eines von Folgendem umfasst: Füllen der Filterkammern mit Material unter Druck, Pumpen von Waschfluid in die Filterkammern, Aufblasen einer oder mehrerer Membranen in den Filterkammern und Trocknen des Materials in den Filterkammern mit zwangsumgewälzter Luft.

16. Verfahren nach einem der Ansprüche 13 bis 15, wobei das Verfahren ferner umfasst: Messen der Position der beweglichen Druckplatte, wenn sich die bewegliche Druckplatte in der abgedichteten Position vor Druckbeaufschlagung der Filterkammern befindet.

17. Verfahren nach Anspruch 16, wobei die Bewegung der beweglichen Druckplatte im Verhältnis zu der Position der beweglichen Druckplatte in der abgedichteten Position vor Druckbeaufschlagung der Filterkammern gemessen wird.

18. Verfahren nach einem der Ansprüche 13 bis 17, wobei der Druckfilter (100) ein horizontaler Plattenfilter ist, und wobei der Stapel von Filterplatten (101) vertikal angeordnet ist.

19. Verfahren nach Anspruch 18, wobei die bewegliche Druckplatte eine untere Druckplatte (103) ist, die unterhalb des Stapels von Filterplatten (101) positioniert ist, und/oder
wobei die bewegliche Druckplatte eine obere Druckplatte (102) ist, die oberhalb des Stapels von Filterplatten (101) positioniert ist.

## Revendications

1. Filtre à pression (100) comprenant :
une pluralité de plaques filtrantes (101), les plaques filtrantes (101) étant disposées en pile;
une plaque de pression mobile configurée pour être déplacée d'une position rétractée à une position engagée pour former des chambres filtrantes entre des plaques filtrantes adjacentes (101); et
au moins un capteur de déplacement (107) configuré pour mesurer le déplacement de la plaque de pression mobile par rapport à un cadre fixe du filtre à pression (100);
**caractérisé en ce que** le filtre à pression (100) est configuré pour :
surveiller le déplacement de la plaque de pression mobile pendant une pressurisation cyclique des chambres filtrantes; et
fournir un avertissement si le déplacement de la plaque de pression mobile change d'une quantité dépassant un seuil pendant la pressurisation.

2. Filtre à pression (100) selon la revendication 1, dans lequel le filtre à pression (100) est également configuré pour continuer de surveiller le déplacement de la plaque de pression mobile après la pressurisation pendant que les chambres filtrantes restent pressurisées, et pour fournir un avertissement si le déplacement de la plaque de pression mobile change d'une quantité dépassant un seuil après la pressurisation.

3. Filtre à pression (100) selon la revendication 1, dans lequel la pressurisation du filtre comprend au moins l'un parmi : remplir les chambres filtrantes d'un matériau sous pression, pomper un fluide de lavage dans les chambres filtrantes; gonfler un ou plusieurs diaphragmes à l'intérieur des chambres filtrantes et sécher le matériau dans les chambres filtrantes à l'air forcé.

4. Filtre à pression (100) selon une revendication précédente quelconque, dans lequel le filtre à pression (100) est également configuré pour mesurer la position de la plaque de pression mobile lorsque la plaque de pression mobile est en position étanche avant la pressurisation des chambres filtrantes.

5. Filtre à pression (100) selon la revendication 4, dans lequel le déplacement de la plaque de pression mobile est mesuré par rapport à la position de la plaque de pression mobile en position étanche avant la pressurisation des chambres filtrantes.

6. Filtre à pression (100) selon une revendication précédente quelconque, dans lequel le seuil est une valeur comprise entre 1 et 5 mm.

7. Filtre à pression (100) selon une revendication précédente quelconque, dans lequel le filtre à pression (100) est également configuré pour fournir une alarme et arrêter le fonctionnement du filtre à pression (100) si le déplacement de la plaque de pression mobile change d'une quantité dépassant un deuxième seuil pendant la pressurisation et/ou après la pressurisation pendant que les chambres filtrantes restent pressurisées.

8. Filtre à pression (100) selon la revendication 7, dans lequel le deuxième seuil est une valeur comprise entre 3 et 10 mm.

9. Filtre à pression (100) selon la revendication 8, lorsqu'il dépend de la revendication 6, dans lequel le deuxième seuil est plus élevé que le premier seuil.

10. Filtre à pression (100) selon une revendication précédente quelconque, dans lequel le capteur de déplacement (107) est un capteur à corde.

11. Filtre à pression (100) selon une revendication précédente quelconque, dans lequel le filtre à pression (100) est un filtre à plaques horizontales, et dans lequel la pile de plaques filtrantes (101) est disposée verticalement.

12. Filtre à pression (100) selon la revendication 11, dans lequel la plaque de pression mobile est une plaque de pression inférieure (103) positionnée en dessous de la pile de plaques filtrantes (101), et/ou
la plaque de pression mobile est une plaque de pression supérieure (102) positionnée au-dessus de la pile de plaques filtrantes (101).

13. Procédé pour exploiter un filtre à pression (100), le filtre à pression (100) comprenant une pluralité de plaques filtrantes (101) disposées en pile, une pluralité de joints de plaque disposés entre les plaques filtrantes (101) pour créer un joint d'étanchéité entre les plaques filtrantes (101) lorsqu'elles sont sous pression, et une plaque de pression mobile, ledit procédé comprenant les étapes consistant à :
déplacer la plaque de pression mobile vers une position étanche pour former des chambres filtrantes entre les plaques filtrantes (101); et
pressuriser les chambres filtrantes; **caractérisé en ce que** le procédé comprend également les étapes consistant à
mesurer le déplacement de la plaque de pression mobile pendant la pressurisation des chambres filtrantes;
si le déplacement dépasse un seuil, fournir un avertissement.

14. Procédé selon la revendication 13, dans lequel le procédé comprend également l'étape consistant à surveiller le déplacement de la plaque de pression mobile après la pressurisation et fournir une notification si le déplacement de la plaque de pression mobile change d'une quantité dépassant un seuil après la pressurisation.

15. Procédé selon la revendication 13 ou 14, dans lequel la pressurisation du filtre comprend au moins l'une des étapes consistant à : remplir les chambres filtrantes d'un matériau sous pression, pomper un fluide de lavage dans les chambres filtrantes, gonfler un ou plusieurs diaphragmes à l'intérieur des chambres filtrantes et sécher le matériau dans les chambres filtrantes à l'air forcé.

16. Procédé selon l'une des revendications 13 à 15, dans lequel le procédé comprend également l'étape consistant à mesurer la position de la plaque de pression mobile lorsque la plaque de pression mobile est en position étanche avant la pressurisation des chambres filtrantes.

17. Procédé selon la revendication 16, dans lequel le déplacement de la plaque de pression mobile est mesuré par rapport à la position de la plaque de pression mobile en position étanche avant la pressurisation des chambres filtrantes.

18. Procédé selon l'une des revendications 13 à 17, dans lequel le filtre à pression (100) est un filtre à plaques horizontales, et dans lequel la pile de plaques filtrantes (101) est disposée verticalement.

19. Procédé selon la revendication 18, dans lequel la plaque de pression mobile est une plaque de pression inférieure (103) positionnée en dessous de la pile de plaques filtrantes (101), et/ou
la plaque de pression mobile est une plaque de pression supérieure (102) positionnée au-dessus de la pile de plaques filtrantes (101).
